# EUROPÄISCHE PATENTSCHRIFT

(11) **EP 1 033 919 B1**
(45) Veröffentlichungstag und Bekanntmachung des Hinweises auf die Patenterteilung: **25.02.2004**
(21) Anmeldenummer: 98964361.4
(22) Anmeldetag: 12.11.1998
(51) Int. Cl.: A23J 3/18, A23J 3/24

(54) **VERFAHREN ZUR HERSTELLUNG EINES NAHRUNGSMITTELS MIT PFLANZENPROTEIN, INSBESONDERE MIT WEIZENEIWEISS, SOWIE EIN DARAUS HERGESTELLTES NAHRUNGSMITTEL**
METHOD FOR PRODUCING A FOOD STUFF WITH PLANT PROTEIN, ESPECIALLY WHEAT ALBUMEN, AND FOOD PRODUCT SO PRODUCED
PROCEDE DE PRODUCTION D'UNE DENREE ALIMENTAIRE RENFERMANT UNE PROTEINE VEGETALE, NOTAMMENT DE L'ALBUMEN DE BLE, ET DENREE ALIMENTAIRE AINSI OBTENUE

(30) Priorität: 13.11.1997 DE 19751204
(43) Veröffentlichungstag der Anmeldung: 13.09.2000
(73) Patentinhaber: Mayer, Wolfgang, 10829 Berlin (DE)
(72) Erfinder: Mayer, Wolfgang, 10829 Berlin (DE)
(74) Vertreter: Kietzmann, Manfred
(86) Internationale Anmeldenummer: PCT/DE1998/003423
(87) Internationale Veröffentlichungsnummer: WO 1999/025204

(56) Entgegenhaltungen:
- DE-A- 2 211 943
- DE-A- 2 713 709
- US-A- 3 713 837
- US-A- 4 495 205
- DATABASE WPI Section Ch, Week 7824 Derwent Publications Ltd., London, GB; Class D12, AN 78-43203A XP002095752 & JP 53 050358 A (NIPPON SUISAN KAISHA LTD), 8. Mai 1978
- LAWRENCE R., CONSOLACION F., JELEN P.: "Formation of structured protein foods by freeze texturization" JOURNAL OF FOOD SCIENCE, Bd. 52, Nr. 3, 1987, Seite 601-608 XP002095751

## Beschreibung

Die Erfindung betrifft ein Verfahren zur Herstellung eines Nahrungsmittels mit Pflanzenprotein, insbesondere mit Weizeneiweiß, sowie ein daraus hergestelltes Nahrungsmittel.

Es ist bekannt, Nahrungsmittel mit Pflanzenprotein, dabei auch mit Weizeneiweiß, herzustellen.

Durch die DE 44 22 658 A1 ist ein Verfahren zur Herstellung von fleischartiger, proteinhaltiger Nahrung bekannt, das folgende Verfahrensschritte beinhaltet:
- Mischen von Wasser und einem Material, welches mindestens ein Protein enthält, in einem Mischungsbehälter, während das Wasser und das Material erhitzt und unter Druck gesetzt werden, wodurch eine Mixtur hergestellt wird, und die Wassermenge derart kontrolliert wird, daß der Wassergehalt in der Mixtur eingestellt wird auf 30 bis 70 Gew.-% bezogen auf das Gewicht des das Protein enthaltenden Materials,
- Abkühlen der in dem Mischungsschritt hergestellten Mixtur, die Mixtur mit einer Orientierung versehen, und die Mixtur aus dem Mischungsbehälter extrudieren, somit proteinhaltiges Material erzeugen und
- das proteinhaltige Material unter Kompression und gleichzeitigem Erhitzen abformen.

Bei diesem Verfahren wird vor allem Sojabohnenprotein eingesetzt. Der Anteil beträgt mindestens 50 Gew.-% bezogen auf das Material. Weiterhin wird u. a. Weizengluten mit einem Gewichtsanteil bis zu 1,5 verwendet. Bei der Verarbeitung beträgt die Röhrentemperatur in dem Mischungsbehälter 120 °C bis 250 °C. Die durch die Extruderdüse hindurchtretende Mixtur wird auf etwa 80 °C bis 90 °C abgekühlt.

Mit diesem Verfahren ist es möglich, proteinhaltige Nahrung herzustellen, die eine faserartige Orientierung hat.

Das Verfahren erfordert jedoch zur Herstellung der proteinhaltigen Nahrung im wesentlichen leicht verarbeitbare Proteine, wie es das Sojabohnenprotein ist.

Außerdem tritt durch das notwendige Erhitzen eine gewisse Denaturierung des Proteins ein.

Durch die DE 38 83 447 T2 ist ein Verfahren zur Herstellung von Gluten mit faserförmiger Struktur und Bindungseigenschaften bekannt, umfassend
a) Bewegen von Weizengluten mit Ascorbinsäure in Gegenwart einer Lösung einer genießbaren Säure bei einem pH-Wert im Bereich zwischen 4,0 und 8,0 und bei einer Temperatur unterhalb 70 °C unter Erhalt eines entspannten Glutens in Form einer viskosen, flüssigkeitsähnlichen Struktur und
b) Erzeugen einer stabilen, faserförmigen Struktur durch Einbringen eines texturierten, pflanzlichen Proteins in das entspannte Gluten.

Durch den Einsatz der Ascorbinsäure in Gegenwart einer Lösung einer genießbaren Säure wird das Entstehen eines zähen Teiges vermieden, wie er sich beim Mischen von Gluten mit Wasser bildet und der schwer weiter verarbeitbar ist. Unter der Einwirkung der Säure entsteht ein entspanntes Gluten in Form einer viskosen, flüssigkeitsähnlichen Struktur, in die ein texturiertes, pflanzliches Protein eingebracht werden kann.

Es ist bekannt, in der Lebensmittelindustrie in sehr hohem Umfang genießbare Säuren einzusetzen. Durch den ständigen Genuß derartiger Lebensmittel ist es möglich, daß es, insbesondere bei empfindlichen Personen, zu Reizungen der Schleimhaut im Verdauungstrakt kommen kann. Deshalb sollte der Einsatz auch von genießbaren Säuren begrenzt werden.

Weiterhin offenbart die DE-A-2713709 ein Verfahren zur Herstellung eines Proteinmaterials mit Gewebestruktur, bei dem eine Mischung aus einem heißkoagulierbaren Protein und Wasser hergestellt wird, wonach diese Mischung eingefriert wird und das Protein in der gefrorenen Masse stabilisiert wird durch Eintauchen in eine wässrige Äthanollösung. Bei diesem Verfahren kann zum Beispiel Weizenproteinkonzentrat verwendet werden.

Die DE-A-2211943 beschreibt ein ähnliches Verfahren, wobei die Textur des gefrorenen Materials verfestigt wird mittels Erhitzen.

Nachteilig bei diesen Verfahren ist die Konsistenz und die Struktur der Produkte.

Der Erfindung liegt die Aufgabe zugrunde, ein Verfahren zur Herstellung eines Nahrungsmittels mit Pflanzenprotein, insbesondere mit Weizeneiweiß, sowie ein daraus hergestelltes Nahrungsmittel zu schaffen, das eine leichte Verarbeitbarkeit von hydratisiertem Pflanzenprotein sowie eine homogene Mischung mit Zutaten ermöglicht.

Erfindungsgemäß wird die Aufgabe durch folgende Verfahrensschritte gelöst:
- Mischen des Pflanzenproteins mit Wasser zu einem Zwischenprodukt in einer Mischeinrichtung bis zu einer Teilhydratation oder einer vollständigen Hydratation;
- Einfrieren des Zwischenproduktes in einer Gefriereinrichtung zu einem gefrorenen Zwischenprodukt;
- Zerkleinern des gefrorenen Zwischenproduktes in einer Zerkleinerungseinrichtung bis zu einem grob bis fein zerkleinerten Zwischenprodukt;
- Verarbeitung des grob bis fein zerkleinerten Zwischenproduktes in ganz oder teilweise gefrorenem Zustand zu einer Mischung und/oder einem Fertigprodukt.

Mit dem erfindungsgemäßen Verfahren ist es möglich, ein Nahrungsmittel herzustellen, bei dem das Pflanzenprotein aus einem Weizeneiweiß, das sich in einem rohen, unkoagulierten Zustand befindet, besteht.

Vorteilhafterweise wird das Pflanzenprotein mit Wasser und mit einer Aroma-Strukturmischung, aus mindestens einem Aroma und Konsistenz sowie Struktur beeinflussenden Substanzen bestehend, in der Mischeinrichtung gemischt.

In der Mischeinrichtung kann in einem Mischer oder einem Kneter gemischt werden.

Es ist aber auch möglich, daß in der Mischeinrichtung in einem Horizontal- oder einem Vertikal-Cutter gemischt und strukturiert wird.

Vorzugsweise wird das Zwischenprodukt vor dem Einfrieren in volumen- und/oder gewichtsmäßig gleich große Formstücke geteilt.

Zweckmäßig ist es, wenn das Einfrieren des Zwischenproduktes zu dem gefrorenen Zwischenprodukt bei Temperaturen um -18 °C durchgeführt wird und durch Schockfrosten erfolgt.

Es ist möglich, daß das gefrorene Zwischenprodukt in der Zerkleinerungseinrichtung zu dem zerkleinerten Zwischenprodukt stufenweise zerkleinert wird, wobei das gefrorene Zwischenprodukt zuerst vorzerkleinert und anschließend grob bis fein zerkleinert wird.

Diese Zerkleinerung kann dadurch erfolgen, daß das gefrorene Zwischenprodukt in einem Zerhacker vorzerkleinert und anschließend durch Wolfen und/oder Cuttern grob bis fein zerkleinert wird.

Zur Herstellung unterschiedlicher Nahrungsmittel ist es vorteilhaft, wenn das grob bis fein zerkleinerte Zwischenprodukt in ganz oder teilweise gefrorenem Zustand in einer Mischeinrichtung mit einer oder mehreren Zutaten zu einer Mischung verarbeitet wird.

Das grob bis fein zerkleinerte Zwischenprodukt oder die Mischung kann in ganz oder teilweise gefrorenem Zustand in einer Verarbeitungseinrichtung geformt werden und danach die Weiterverarbeitung in ungefrostetem Zustand zu einem Fertigprodukt erfolgen.

Es ist aber auch möglich, daß das grob bis fein zerkleinerte Zwischenprodukt oder die Mischung in ganz oder teilweise gefrorenem Zustand in einer Verarbeitungseinrichtung geformt und danach tiefgefroren wird.

Vorteilhaft ist es auch, wenn das grob bis fein zerkleinerte Zwischenprodukt oder die Mischung in ganz oder teilweise gefrorenem Zustand in einer Verarbeitungseinrichtung in einzelne, annähernd gleich große Stücke geformt und anschließend mit einem weiteren Lebensmittel ummantelt wird, das eine gegenseitige Haftung der einzelnen Stücke verringert.

Dabei kann das grob bis fein zerkleinerte Zwischenprodukt oder die Mischung in ganz oder teilweise gefrorenem Zustand in einer Verarbeitungseinrichtung als Granulat mit einem weiteren Lebensmittel ummantelt werden, das eine gegenseitige Haftung der einzelnen Stücke verringert.

Vorzugsweise bestehen die zur Ummantelung der Stücke verwendeten Lebensmittel aus
- einem Öl oder flüssigem Fett,
- einem pflanzlichen Eiweiß,
- einer Stärke,
- einem Mehl.

In weiterer Ausbildung der Erfindung umfaßt diese ein Nahrungsmittel, hergestellt durch ein Verfahren zur Herstellung eines Nahrungsmittels mit Pflanzenprotein, insbesondere mit Weizeneiweiß, mit folgenden Verfahrensschritten:
- Mischen des Pflanzenproteins mit Wasser zu einem Zwischenprodukt in einer Mischeinrichtung bis zu einer Teilhydratation oder einer vollständigen Hydratation;
- Einfrieren des Zwischenproduktes in einer Gefriereinrichtung zu einem gefrorenen Zwischenprodukt;
- Zerkleinern des gefrorenen Zwischenproduktes in einer Zerkleinerungseinrichtung bis zu einem grob bis fein zerkleinerten Zwischenprodukt;
- Verarbeitung des grob bis fein zerkleinerten Zwischenproduktes in ganz oder teilweise gefrorenem Zustand zu einer Mischung und/oder einem Fertigprodukt.

Das Nahrungsmittel kann ein Pflanzenprotein aus einem Weizeneiweiß, das sich in einem rohen, unkoagulierten Zustand befindet, aufweisen.

Besonders zweckmäßig für das Nahrungsmittel ist es, wenn dem mit dem Wasser gemischten Pflanzenprotein eine Aroma-Strukturmischung aus mindestens einem Aroma und Konsistenz und Struktur beeinflussenden Substanzen zugemischt ist.

Dabei kann das Pflanzenprotein mit der Aroma-Strukturmischung vor der Zugabe von Wasser gemischt sein.

Für das Nahrungsmittel können dem grob bis fein zerkleinerten Zwischenprodukt eine oder mehrere Zutaten zugesetzt sein und das grob bis fein zerkleinerte Zwischenprodukt kann gemeinsam mit den Zutaten zu einer Mischung gemischt sein.

Ein bevorzugtes Nahrungsmittel besteht darin, daß das grob bis fein zerkleinerte Zwischenprodukt oder die Mischung in ganz oder teilweise gefrorenem Zustand in einer Verarbeitungseinrichtung geformt und danach die Weiterverarbeitung in ungefrostetem Zustand zu einem Fertigprodukt erfolgt ist.

Weiterhin ist es möglich, daß das grob bis fein zerkleinerte Zwischenprodukt oder die Mischung in ganz oder teilweise gefrorenem Zustand in einer Verarbeitungseinrichtung geformt und danach tiefgefroren ist.

Ein weiteres bevorzugtes Nahrungsmittel besteht darin, daß das grob bis fein zerkleinerte Zwischenprodukt oder die Mischung in ganz oder teilweise gefrorenem Zustand in einer Verarbeitungseinrichtung in einzelne, annähernd gleich große Stücke geformt und mit einem weiteren Lebensmittel, das eine gegenseitige Haftung der einzelnen Stücke verringert, ummantelt ist.

Hierbei kann auch das grob bis fein zerkleinerte Zwischenprodukt oder die Mischung in ganz oder teilweise gefrorenem Zustand in einer Verarbeitungseinrichtung als Granulat mit einem weiteren Lebensmittel, welches eine gegenseitige Haftung der einzelnen Stücke verringert, ummantelt sein.

Das zum Ummanteln der Stücke verwendete Lebensmittel ist vorzugsweise
- ein Öl oder flüssiges Fett,
- ein pflanzliches Eiweiß,
- eine Stärke,
- ein Mehl.

Die Erfindung wird an einem Ausführungsbeispiel näher erläutert. Die zugehörige Zeichnung zeigt ein Fließschema zur Herstellung eines Nahrungsmittels mit Pflanzenprotein.

In eine Mischeinrichtung 1 werden ein Pflanzenprotein A sowie Wasser B eingegeben. Weiterhin wird vorzugsweise eine Aroma-Strukturmischung C, aus mindestens einem Aroma und Konsistenz sowie Struktur beeinflussenden Substanzen bestehend, hinzugefügt. Die Bestandteile werden gemischt, bis eine Hydratation bzw. eine Teilhydratation erfolgt und ein Zwischenprodukt D entsteht.

Es ist auch möglich, ein in pulvriger Form vorliegendes Pflanzenprotein A mit einer ebenfalls in pulvriger Form vorliegenden Aroma-Strukturmischung C vor der Zugabe von Wasser B zu mischen.

Das Pflanzenprotein A kann aus unterschiedlichen Proteinen bestehen. Besonders ist der Einsatz eines Weizeneiweißes in rohem, unkoaguliertem Zustand vorgesehen. Dieses Weizeneiweiß ist sehr gut als Nahrungsmittel geeignet. Es besteht jedoch der Nachteil, daß bei der Hydratation dieses rohe, unkoagulierte Weizeneiweiß eine sehr zähe Konsistenz aufweist. Aus einer derartigen Masse geformte Produkte, wie Bratlinge, Klöße oder ähnliches, sind bei der Weiterverarbeitung nicht formstabil.

In der Mischeinrichtung 1 kommen an sich bekannte, mechanisch arbeitende Mischer zum Einsatz.

Bei der Verarbeitung eines rohen, unkoagulierten Weizeneiweißes oder eines vergleichbaren Pflanzenproteins A ist es zweckmäßig, einen Cutter als Horizontal- oder Vertikal-Cutter einzusetzen. Bei dem Einsatz einer derartigen Vorrichtung erfolgt gleichzeitig eine Strukturierung der ständig zäher werdenden Masse. Das hergestellte Zwischenprodukt D kann relativ leicht dem Cutter als Teil der Mischeinrichtung 1 entnommen werden.

Es ist auch möglich, daß die Mischeinrichtung 1 aus mehreren Vorrichtungen besteht, beispielsweise einem Mischer und einer Portioniervorrichtung für das Zwischenprodukt D.

Auf diese Weise kann das Zwischenprodukt D in volumen- und gewichtsmäßig gleich große Formstücke geteilt werden.

Das Zwischenprodukt D wird anschließend einer Gefriereinrichtung 2 zugeführt. In der Gefriereinrichtung 2 wird das Zwischenprodukt D eingefroren, d. h. auf eine Temperatur unter 0 °C gebracht. Vorteilhaft ist ein Einfrieren des Zwischenproduktes D bei Temperaturen um -18 °C. Damit entsteht ein gefrorenes Zwischenprodukt E mit einer längeren Haltbarkeitsdauer.

Vorzugsweise wird beim Einfrieren das Schockfrosten angewandt. Es ist jedoch auch ein langsames Einfrieren möglich.

Die in der Gefriereinrichtung 2 zum Einfrieren und Lagern des gefrorenen Zwischenproduktes E eingesetzte Temperatur ist wesentlich von der Verwendung, aber auch der Zusammensetzung des herzustellenden Fertigproduktes I abhängig.

Zur Weiterverarbeitung wird das gefrorene Zwischenprodukt E einer Zerkleinerungseinrichtung 3 zugeführt. Die in der Zerkleinerungseinrichtung 3 zum Einsatz kommenden Vorrichtungen sind abhängig von der Beschaffenheit des gefrorenen Zwischenproduktes E. So ist es zweckmäßig, bei großen und tiefgefrorenen Formstücken eine Vorrichtung zum Vorzerkleinern einzusetzen. Die Vorrichtung kann beispielsweise ein Zerhacker oder ein Cutter sein. Die vorzerkleinerten Formstücke werden anschließend grob bis fein zerkleinert. Dieses kann durch Wolfen und/oder Cuttern erfolgen.

Es wird ein zerkleinertes Zwischenprodukt F hergestellt, das ganz oder teilweise gefroren ist. Die Art der Zerkleinerung beeinflußt auch die Konsistenz und die Struktur des Zwischenproduktes F und hiervon ausgehend auch des Fertigproduktes I.

Da beim Zerkleinern des gefrorenen Zwischenproduktes E Wärme entsteht, ist es erforderlich, die Zerkleinerung so durchzuführen, daß der Gefrierpunkt des gefrorenen Zwischenproduktes E nicht überschritten wird. Hierzu kann es erforderlich sein, die Vorrichtung zum Zerkleinern zu kühlen.

Anschließend wird das zerkleinerte Zwischenprodukt F einer Mischeinrichtung 4 oder direkt einer Verarbeitungseinrichtung 5 zugeführt.

In der Mischeinrichtung 4 werden dem zerkleinerten Zwischenprodukt F gewünschte Zutaten G zugemischt.

So ist es möglich, Mischungen H mit folgenden Zutaten G herzustellen:
1. frisches, gefrorenes oder getrocknetes Gemüse, wobei letzteres hydratisiert oder nicht hydratisiert sein kann,
2. ein ungefrorenes, rohes, gecuttertes und/oder gemengtes Weizeneiweiß,
3. ein gekochtes und zerkleinertes Weizeneiweiß,
4. ein zerkleinertes, gefrorenes, pflanzliches Eiweiß, das als Hauptbestandteil lösliches Eiweiß ohne Klebewirkung enthält,
5. ein ungefrorenes, pflanzliches Eiweiß.

Es ist auch möglich, mehrere zerkleinerte Zwischenprodukte F, die gefroren wurden, zu einer Mischung H zu verarbeiten.

In der Aufzählung sind einzelne Beispiele genannt, wobei auch der Zusatz weiterer Zutaten G, darunter auch gefrorener Zutaten, möglich ist.

Da das zerkleinerte Zwischenprodukt F ganz oder teilweise gefroren in der Mischeinrichtung 4 mit den anderen Zutaten G gemischt wird, kommt es zu keinen örtlichen Klumpenbildungen des grob bis fein zerkleinerten Zwischenproduktes F, wie es sonst bei Einsatz von Weizeneiweiß leicht möglich ist. Außerdem bleibt die durch die Grob- bis Feinzerkleinerung in der Gefriereinrichtung 2 durch Wolfen und/oder Cuttern entstandene Konsistenz oder Struktur aufrecht erhalten. Wenn eine gefrorene Zutat G, wie beispielsweise Gemüse, zugemischt wird, wird dadurch die gesamte Mischung H gekühlt und es kann auch ein angetautes Zwischenprodukt F verarbeitet werden.

Die hergestellte Mischung H wird der Verarbeitungseinrichtung 5 zugeführt.

In der Verarbeitungseinrichtung 5 wird das dieser direkt aus der Zerkleinerungseinrichtung 3 zugeführte, zerkleinerte Zwischenprodukt F oder die Mischung H weiter verarbeitet. Hierbei sind zu Beginn des Verarbeitungsprozesses das grob bis fein zerkleinerte Zwischenprodukt F bzw. die Mischung H zumindest noch teilweise gefroren.

Es sind verschiedene Verarbeitungsprozesse möglich, wie
1. Formen und Frosten,
2. Formen und Fritieren,
3. Formen, Panieren und Fritieren,
4. Formen, Panieren, Fritieren und Frosten,
5. Abfüllen in Därme, Kochen,
6. Abfüllen in Därme, Kochen, Weiterverarbeiten, wie Schneiden, Panieren, Fritieren.

Nach Herstellung des gewünschten Fertigproduktes I wird dieses einer Verpackungseinrichtung 6 zugeführt und dort zu dem Verkaufsprodukt K verpackt.

Wenn die Mischung H in Därme abgefüllt und gekocht ist, können die Därme gleichzeitig die Verpackung sein.

In der Verarbeitungseinrichtung 5 sind auch noch andere Verarbeitungsmöglichkeiten gegeben. Aus dem grob bis fein zerkleinerten Zwischenprodukt F bzw. der Mischung H werden einzelne, annähernd gleich große Stücke, beispielsweise in Kugelform, geformt. Das Formen erfolgt in einem Zustand des Ausgangsstoffes, bei dem eine größere Klumpenbildung nicht erfolgt, d. h. im gefrosteten bzw. teilweise gefrosteten Zustand.

Die geformten Stücke werden dann mit einem weiteren Lebensmittel ummantelt, das eine Klumpenbildung der einzelnen Stükke weitgehend verhindert. Eine derartige Ummantelung kann auf verschiedene Weise erfolgen, durch
- Wälzen in Ö1 oder einem flüssigen Fett,
- Pudern oder Wälzen in einem pflanzlichen Eiweiß, wie Erbsen- oder Sojaeiweiß,
- Pudern oder Wälzen in Stärke oder einem Mehl.

Die ummantelten Stücke haften nur noch geringfügig aneinander und sind leicht zu trennen.

Es ist auch möglich, das grob bis fein zerkleinerte Zwischenprodukt F bzw. die Mischung H ohne eine vorherige Vorformung zu ummanteln. Dadurch entsteht ein ummanteltes Granulat. Vor der Ummantelung kann das Zwischenprodukt F oder die Mischung H klassiert werden.

Die ummantelten Produkte können dann in der Verarbeitungseinrichtung 5, wie vorstehend beschrieben, in verschiedenen Verarbeitungsprozessen eingesetzt werden. So ist es beispielsweise möglich, mit den Stücken einen Belag auf einem Backwerk, wie beispielsweise einer Pizza, aufzubringen, wobei dann während des Backvorganges aus den einzelnen Stücken sich der Belag, auch in Verbindung mit anderen Lebensmitteln, bildet.

Die Stücke können auch als Einlagen in Konserven oder Präserven eingesetzt werden.

Weiterhin ist es möglich, die ummantelten Stücke zu frosten und als ein gefrostetes Fertigprodukt I in einer Verpackungseinrichtung 6 zu einem Verkaufsprodukt K zu verpacken.

Um die erforderliche Arbeitstemperatur zu gewährleisten, können die Mischeinrichtung 4 und die Verarbeitungseinrichtung 5 Kühlvorrichtungen aufweisen.

In dem Ausführungsbeispiel sind die einzelnen Einrichtungen mit ihren Vorrichtungen sowie die dort durchzuführenden Verfahrensschritte als getrennte Einheiten beschrieben. Bei der Herstellung, insbesondere von kleinen Mengen eines Verkaufsproduktes K, können dabei auch in einer Einrichtung mehrere unterschiedliche Verfahrensschritte durchgeführt werden. So wäre es beispielsweise möglich, die Mischeinrichtung 1, die Zerkleinerungseinrichtung 3 und die Mischeinrichtung 4 zu einer Arbeitseinheit zusammenzufassen. Dabei können einzelne Vorrichtungen für verschiedene Verfahrensschritte benutzt werden.

Eine weitere bevorzugte Möglichkeit besteht darin, die Einrichtungen in einem kontinuierlichen Verfahren einzusetzen, wobei dabei die Einrichtungen miteinander verkettet sein können.

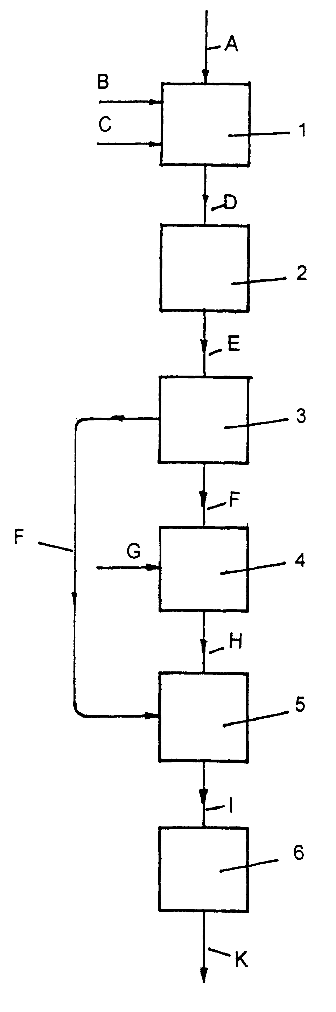

## Patentansprüche

1. Verfahren zur Herstellung eines Nahrungsmittels mit Pflanzenprotein, insbesondere mit Weizeneiweiß, **gekennzeichnet durch** die Verfahrensschritte:
- Mischen des Pflanzenproteins (A) mit Wasser (B) zu einem Zwischenprodukt (D) in einer Mischeinrichtung (1) bis zu einer Teilhydratation oder einer vollständigen Hydratation;
- Einfrieren des Zwischenproduktes (D) in einer Gefriereinrichtung (2) zu einem gefrorenen Zwischenprodukt (E);
- Zerkleinern des gefrorenen Zwischenproduktes (E) in einer Zerkleinerungseinrichtung (3) bis zu einem grob bis fein zerkleinerten Zwischenprodukt (F);
- Verarbeitung des grob bis fein zerkleinerten Zwischenproduktes (F) in ganz oder teilweise gefrorenem Zustand zu einer Mischung (H) und/oder einem Fertigprodukt (I).

2. Verfahren nach Anspruch 1, **dadurch gekennzeichnet, daß** das Pflanzenprotein (A) aus einem Weizeneiweiß, das sich in einem rohen, unkoagulierten Zustand befindet, besteht.

3. Verfahren nach Anspruch 1, **dadurch gekennzeichnet, daß** das Pflanzenprotein (A) mit Wasser (B) und mit einer Aroma-Strukturmischung (C), aus mindestens einem Aroma und Konsistenz sowie Struktur beeinflussenden Substanzen bestehend, in der Mischeinrichtung (1) gemischt wird.

4. Verfahren nach Anspruch 1 und 3, **dadurch gekennzeichnet, daß** in der Mischeinrichtung (1) in einem Mischer oder einem Kneter gemischt wird.

5. Verfahren nach Anspruch 1 und 3, **dadurch gekennzeichnet, daß** in der Mischeinrichtung (1) in einem Horizontal- oder einem Vertikal-Cutter gemischt und strukturiert wird.

6. Verfahren nach einem oder mehreren der Ansprüche 1 bis 5, **dadurch gekennzeichnet, daß** das Zwischenprodukt (D) vor dem Einfrieren in volumen- und/oder gewichtsmäßig gleich große Formstücke geteilt wird.

7. Verfahren nach Anspruch 1 und 6, **dadurch gekennzeichnet, daß** das Einfrieren des Zwischenproduktes (D) zu dem gefrorenen Zwischenprodukt (E) bei Temperaturen um -18° C durchgeführt wird.

8. Verfahren nach Anspruch 1 und 6 und 7, **dadurch gekennzeichnet, daß** das Einfrieren des Zwischenproduktes (D) zu dem gefrorenen Zwischenprodukt (E) durch Schockfrosten durchgeführt wird.

9. Verfahren nach Anspruch 1, **dadurch gekennzeichnet, daß** das gefrorenen Zwischenprodukt (E) in der Zerkleinerungseinrichtung (3) zu dem zerkleinerten Zwischenprodukt (F) stufenweise zerkleinert wird, wobei das gefrorene Zwischenprodukt (E) zuerst vorzerkleinert und anschließend grob bis fein zerkleinert wird.

10. Verfahren nach Anspruch 9, **dadurch gekennzeichnet, daß** das gefrorene Zwischenprodukt (E) in einem Zerhacker vorzerkleinert und anschließend durch Wolfen und/oder Cuttern grob bis fein zerkleinert wird.

11. Verfahren nach einem oder mehreren der Ansprüche 1 bis 10, **dadurch gekennzeichnet, daß** das grob bis fein zerkleinerte Zwischenprodukt (F) in ganz oder teilweise gefrorenem Zustand in einer Mischeinrichtung (4) mit einer oder mehreren Zutaten (G) zu einer Mischung (H) verarbeitet wird.

12. Verfahren nach einem oder mehreren der Ansprüche 1 bis 11, **dadurch gekennzeichnet, daß** das grob bis fein zerkleinerte Zwischenprodukt (F) oder die Mischung (H) in ganz oder teilweise gefrorenem Zustand in einer Verarbeitungseinrichtung (5) geformt wird und danach die Weiterverarbeitung in ungefrostetem Zustand zu einem Fertigprodukt (I) erfolgt.

13. Verfahren nach einem oder mehreren der Ansprüche 1 bis 11, **dadurch gekennzeichnet, daß** das grob bis fein zerkleinerte Zwischenprodukt (F) oder die Mischung (H) in ganz oder teilweise gefrorenem Zustand in einer Verarbeitungseinrichtung (5) geformt und danach tiefgefroren wird.

14. Verfahren nach einem oder mehreren der Ansprüche 1 bis 11, **dadurch gekennzeichnet, daß** das grob bis fein zerkleinerte Zwischenprodukt (F) oder die Mischung (H) in ganz oder teilweise gefrorenem Zustand in einer Verarbeitungseinrichtung (5) in einzelne, annähernd gleich große Stücke geformt und anschließend mit einem weiteren Lebensmittel ummantelt wird, das eine gegenseitige Haftung der einzelnen Stücke verringert.

15. Verfahren nach einem oder mehreren der Ansprüche 1 bis 11, **dadurch gekennzeichnet, daß** das grob bis fein zerkleinerte Zwischenprodukt (F) oder die Mischung (H) in ganz oder teilweise gefrorenem Zustand in einer Verarbeitungseinrichtung (5) als Granulat mit einem weiteren Lebensmittel ummantelt wird, das eine gegenseitige Haftung der einzelnen Stücke verringert.

16. Verfahren nach den Ansprüchen 14 und 15, **dadurch gekennzeichnet, daß** das zur Ummantelung der Stücke verwendete Lebensmittel aus
- einem Öl oder flüssigem Fett,
- einem pflanzlichen Eiweiß,
- einer Stärke,
- einem Mehl
besteht.

17. Nahungsmittel, erhältlich durch ein Verfahren gemäß Anspruch 1.

18. Nahrungsmittel, erhältlich durch ein Verfahren gemäß Anspruch 1 und 2.

19. Nahrungsmittel, erhältlich durch ein Verfahren gemäß Anspruch 1 und 3.

20. Nahrungsmittel, erhältlich nach einem Verfahren gemäß Anspruch 1 und 3, wobei dem grob bis fein zerkleinerten Zwischenprodukt (F) eine oder mehrere Zutaten (G) zugesetzt sind und das grob bis fein zerkleinerte Zwischenprodukt (F) gemeinsam mit den Zutaten (G) zu einer Mischung (H) gemischt ist.

21. Nahrungsmittel, erhältlich nach einem Verfahren gemäß einem oder mehreren der Ansprüche 1 bis 11 und Anspruch 12.

22. Nahrungsmittel, erhältlich nach einem Verfahren gemäß einem oder mehreren der Ansprüche 1 bis 11 und Anspruch 13.

23. Nahrungsmittel, erhältlich nach einem Verfahren gemäß einem oder mehreren der Ansprüche 1 bis 11 und Anspruch 14.

24. Nahrungsmittel, erhältlich nach einem Verfahren gemäß einem oder mehreren der Ansprüche 1 bis 11 und Anspruch 15.

25. Nahrungsmittel erhältlich nach einem Verfahren gemäß den Ansprüchen 14, 15 und 16.

## Claims

1. A method for producing a food item comprising vegetable protein, in particular wheat protein, **characterised by** the procedural steps of:
- mixing the vegetable protein (A) with water (B) to obtain an interim product (D) in a mixing means (1) up to partial hydration or complete hydration;
- freezing said interim product (D) in a freezing means (2) to obtain a frozen interim product (E);
- chopping said frozen interim product (E) in a chopping means (3) to obtain a roughly to finely chopped interim product (F);
- processing said roughly to finely chopped interim product (F) in a completely or partially frozen state to obtain a mixture (H) and/or a finished product (I).

2. A method according to Claim 1, **characterised in that** said vegetable protein (A) consists of a raw, non-coagulated wheat protein.

3. A method according to Claim 1, **characterised in that** said vegetable protein (A) is mixed in said mixing means (1) with water (B) and a structural flavour mixture (C) comprising at least one flavour and substances influencing consistency and structure.

4. A method according to Claims 1 and 3, **characterised in that** the mixing in said mixing means (1) is performed in a mixing or a kneading device.

5. A method according to Claims 1 and 3, **characterised in that** the mixing and structuring in said mixing means (1) is performed in a horizontal or vertical cutter.

6. A method according to any or several of Claims 1 through 5, **characterised in that** said interim product (D) is partitioned into formed pieces of equal volume and/or weight before freezing.

7. A method according to Claims 1 and 6, **characterised in that** the freezing of the interim product (D) to obtain said frozen interim product (E) is performed at temperatures around -18°C.

8. A method according to Claims 1 and 6 and 7, **characterised in that** the freezing of the interim product (D) to obtain said frozen interim product (E) is performed by shock-freezing.

9. A method according to Claim 1, **characterised in that** said frozen interim product (E) is gradually chopped in said chopping means (3) to obtain said chopped interim product (F), wherein said frozen interim product (E) is at first pre-chopped and then chopped further to obtain rough to fine pieces.

10. A method according to Claim 9, **characterised in that** said frozen interim product (E) is pre-chopped in a chopper and then chopped further by mincing and/or cutting to obtain rough to fine pieces

11. A method according to any or several of Claims 1 through 10, **characterised in that** said roughly to finely chopped interim product (F) is processed in a partially or completely frozen state in a mixing means (4) together with one or more ingredients (G) to obtain a mixture (H).

12. A method according to any or several of Claims 1 through 11, **characterised in that** said roughly to finely chopped interim product (F) or said mixture (H) being in a partially or completely frozen state is formed in a processing means (5) followed by further processing in a non-frozen state to obtain a finished product (I).

13. A method according to any or several of Claims 1 through 11, **characterised in that** said roughly to finely chopped interim product (F) or said mixture (H) being in a partially or completely frozen state is formed in a processing means (5) followed by deep-freezing.

14. A method according to any or several of Claims 1 through 11, **characterised in that** said roughly to finely chopped interim product (F) or said mixture (H) being in a partially or completely frozen state is formed in a processing means (5) into individual pieces of approximately equal size which are then wrapped into another food which reduces mutual adhesion among said individual pieces.

15. A method according to any or several of Claims 1 through 11, **characterised in that** said roughly to finely chopped interim product (F) or said mixture (H) being in a partially or completely frozen, granular state is wrapped in a processing means (5) using another food which reduces mutual adhesion among said individual pieces.

16. A method according to Claims 14 and 15, **characterised in that** said food used for wrapping the pieces consists of
- an oil or liquid fat,
- a vegetable protein,
- a starch,
- a flour.

17. A food item obtainable by a method according to Claim 1.

18. A food item obtainable by a method according to Claims 1 and 2.

19. A food item obtainable by a method according to Claims 1 and 3.

20. A food item obtainable by a method according to Claims 1 and 3, wherein one or more ingredients (G) are added to said roughly to finely chopped interim product (F) and said roughly to finely chopped interim product (F) is mixed with said ingredients (G) to obtain a mixture (H).

21. A food item obtainable by a method according to any or several of Claims 1 through 11 and Claim 12.

22. A food item obtainable by a method according to any or several of Claims 1 through 11 and Claim 13.

23. A food item obtainable by a method according to any or several of Claims 1 through 11 and Claim 14.

24. A food item obtainable by a method according to any or several of Claims 1 through 11 and Claim 15.

25. A food item obtainable by a method according to Claims 14, 15 and 16.

## Revendications

1. Procédé de fabrication d'un produit alimentaire comprenant de protéine végétale, en particulier de protéine de froment, **caractérisé par** les étapes ci-dessous :
- mélanger la protéine végétale (A) avec l'eau (B) pour obtenir un produit intermédiaire (D) dans une installation de mélange (1) jusqu'à hydratation partielle ou hydratation complète ;
- congeler le produit intermédiaire (D) dans une installation de congélation (2) pour obtenir un produit intermédiaire congelé (E) ;
- broyer le produit intermédiaire congelé (E) dans une installation de broyage (3) pour obtenir un produit intermédiaire (F) de granulométrie grossière à fine ;
- traiter le produit intermédiaire (F) de granulométrie grossière à fine à l'état congelé, entièrement ou partiellement, pour obtenir un mélange (H) et/ou un produit fini (I).

2. Procédé selon la revendication 1, **caractérisé en ce que** la protéine végétale (A) est constituée par une protéine de froment à l'état brut, non coagulée.

3. Procédé selon la revendication 1, **caractérisé en ce que** la protéine végétale (A) est mélangée dans une installation de mélange (1) à l'eau (B) et à un mélange de structuration aromatique (C) composé d'au moins un arôme et de substances influençant la consistance et la structure.

4. Procédé selon les revendications 1 et 3, **caractérisé en ce que** dans l'installation de mélange (1) le mélange est fait dans un mélangeur ou malaxeur.

5. Procédé selon les revendications 1 et 3, **caractérisé en ce que** le mélange et la structuration dans l'installation de mélange (1) sont exécutés par un cutter horizontal ou vertical.

6. Procédé selon l'une ou plusieurs des revendications 1 à 5, **caractérisé en ce que** le produit intermédiaire (D) est divisé en portions moulées de volume et/ou de poids équivalent avant congélation.

7. Procédé selon les revendications 1 et 6, **caractérisé en ce que** la congélation du produit intermédiaire (D) pour obtenir le produit intermédiaire congelé (E) est réalisée à une température de -18 °C.

8. Procédé selon les revendications 1, 6 et 7, **caractérisé en ce que** la congélation du produit intermédiaire (D) pour obtenir le produit intermédiaire congelé (E) est réalisée par congélation ultrarapide.

9. Procédé selon la revendication 1, **caractérisé en ce que** le produit intermédiaire congelé (E) est broyé par étapes dans l'installation de broyage (3) pour obtenir le produit intermédiaire broyé (F), le produit intermédiaire (E) étant d'abord soumis à un broyage primaire et ensuite broyé à une granulométrie grossière à fine.

10. Procédé selon la revendication 9, **caractérisé en ce que** le produit intermédiaire congelé (E) est d'abord soumis à un traitement de broyage primaire dans un hacheur et ensuite broyé à une granulométrie grossière à fine dans une éminceuse et/ou par des cutters.

11. Procédé selon une ou plusieurs de revendications 1 à 10, **caractérisé en ce que** le produit intermédiaire (F) broyé à une granulométrie grossière à fine est traité entièrement ou partiellement congelé dans une installation de mélange (4) avec un ou plusieurs ingrédients (G) pour obtenir le mélange (H).

12. Procédé selon l'une ou plusieurs des revendications 1 à 11, **caractérisé en ce que** le produit intermédiaire (F) broyé à une granulométrie grossière à fine ou le mélange (H) entièrement ou partiellement congelé est moulé dans une installation de traitement (5) et traité ensuite à l'état non congelé pour donner le produit fini (I).

13. Procédé selon l'une ou plusieurs des revendications 1 à 11, **caractérisé en ce que** le produit intermédiaire (F) broyé à une granulométrie grossière à fine ou le mélange (H) entièrement ou partiellement congelé est moulé dans une installation de traitement (5) et ensuite congelé.

14. Procédé selon l'une ou plusieurs des revendications 1 à 11, **caractérisé en ce que** le produit intermédiaire (F) broyé à une granulométrie grossière à fine ou le mélange (H) entièrement ou partiellement congelé est moulé dans une installation de traitement (5) pour donner différentes pièces de taille sensiblement identique et ensuite enrobé avec un autre produit alimentaire qui réduit l'adhérence des différentes pièces les unes aux autres.

15. Procédé selon l'une ou plusieurs des revendications 1 à 11, **caractérisé en ce que** le produit intermédiaire (F) broyé à une granulométrie grossière à fine ou le mélange (H) entièrement ou partiellement congelé est moulé dans une installation de traitement (5) et enrobé pour donner des granulés enrobés sous une autre pellicule qui réduit l'adhérence des différentes pièces les unes aux autres.

16. Procédé selon les revendications 14 et 15 **caractérisé en ce que** le produit alimentaire servant de pellicule aux pièces est
- une huile ou une graisse fluidisée,
- une protéine végétale,
- l'amidon,
- une farine.

17. Produit alimentaire obtenu par un procédé selon la revendication 1.

18. Produit alimentaire obtenu par un procédé selon les revendications 1 et 2.

19. Produit alimentaire obtenu par un procédé selon les revendications 1 et 3.

20. Produit alimentaire obtenu par un procédé selon les revendications 1 et 3, un ou plusieurs ingrédients (G) étant ajoutés au produit intermédiaire (F) broyé à une granulométrie grossière à fine et le produit intermédiaire (F) broyé à une granulométrie grossière à fine est mélangé avec les ingrédients (G) pour donner un mélange (H).

21. Produit alimentaire obtenu par un procédé selon l'une ou plusieurs des revendications 1 à 11 et selon la revendication 12.

22. Produit alimentaire obtenu par un procédé selon l'une ou plusieurs des revendications 1 à 11 et selon la revendication 13.

23. Produit alimentaire obtenu par un procédé selon l'une ou plusieurs des revendications 1 à 11 et selon la revendication 14.

24. Produit alimentaire obtenu par un procédé selon l'une ou plusieurs des revendications 1 à 11 et selon la revendication 15.

25. Produit alimentaire obtenu par un procédé selon l'une des revendications 14, 15 et 16.
